# EUROPÄISCHE PATENTSCHRIFT

(11) **EP 1 390 647 B1**
(45) Veröffentlichungstag und Bekanntmachung des Hinweises auf die Patenterteilung: **23.02.2005**
(21) Anmeldenummer: 02750948.8
(22) Anmeldetag: 18.05.2002
(51) Int. Cl.: F16H 61/02

(54) **VERFAHREN ZUM STEUERN EINES AUTOMATGETRIEBES EINES KRAFTFAHRZEUGES**
METHOD FOR OPERATING AN AUTOMATIC GEARBOX ON A MOTOR VEHICLE
PROCEDE POUR COMMANDER UNE BOITE DE VITESSES AUTOMATIQUE D'UN VEHICULE AUTOMOBILE

(30) Priorität: 25.05.2001 DE 10125698
(43) Veröffentlichungstag der Anmeldung: 25.02.2004
(73) Patentinhaber: ZF FRIEDRICHSHAFEN AG, 88038 Friedrichshafen (DE)
(72) Erfinder: HENNEKEN, Markus, 88079 Kressbronn (DE); JAUCH, Friedemann, 88074 Meckenbeuren (DE); SCHULER, Franz-Josef, 88079 Kressbronn (DE); MAUZ, Thomas, 88085 Langenargen (DE); KIEFER, Michael, 66780 Rehlingen-Siersburg (DE)
(86) Internationale Anmeldenummer: PCT/EP2002/005506
(87) Internationale Veröffentlichungsnummer: WO 2002/097308

(56) Entgegenhaltungen:
- WO-A-96/28317
- FR-A- 2 699 978
- US-A- 5 396 420
- US-A- 5 857 161
- US-A- 5 919 244

## Beschreibung

Die Erfindung betrifft ein Verfahren zum Steuern eines Automatgetriebes eines Kraftfahrzeuges, bei dem eine Anforderung zum Ändern einer aktuellen Übersetzung des Automatgetriebes bei Erreichen vorgegebener Betriebszustände des Fahrzeuges automatisch oder auf manuelle Vorgabe in einem manuellen Schaltmodus generiert wird, wobei der aktivierte manuelle Schaltmodus gegenüber einem automatischen Schaltmodus präferiert ist.

Aus der FR-A-2 699 978 ist ein Verfahren zum Steuern eines Automatikgetriebes bekannt, bei dem eine Anforderung zum Ändern einer aktuellen Übersetzung des Automatikgetriebes bei Erreichen vorgegebener Betriebszustände des Fahrzeuges automatisch oder auf manuelle Vorgabe in einem manuellen Schaltmodus generiert wird, wobei der aktivierte manuelle Schaltmodus gegenüber einem automatischen Schaltmodus präferiert ist, und wobei der manuelle Schaltmodus verlassen wird, wenn die aktuelle Motordrehzahl einen bestimmten Schwellwert überschritten hat.

Aus der DE 43 11 886 A1 ist eine Vorrichtung und ein Verfahren bekannt, mit deren Hilfe ein an sich selbsttätig schaltendes Getriebe mit einer Wähleinrichtung für eine erste, automatische Betriebsart und einer Wähleinrichtung für eine zweite, vom Fahrer beeinflußte Betriebsart, welche auch manueller Schaltmodus genannt wird, bedienbar ist. Zwischen dem automatischen Schaltmodus und dem manuellen Schaltmodus kann mit der ersten Wähleinrichtung umgeschaltet werden, indem ein Wählhebel der ersten Wähleinrichtung von einer Stellung D in eine Stellung M bewegt wird oder indem mittels einer am Lenkrad angeordneten zweiten Wähleinrichtung, die als eine Wippe oder ein anderes Schaltmittel ausgebildet sein kann, ein Schaltsignal abgegeben wird.

Ebenso ist es vorgesehen, daß mittels den beiden Wähleinrichtungen ein Umschalten von dem manuellen Schaltmodus in den automatischen Schaltmodus durchführbar ist, wobei der Wählhebel von der Stellung M in eine Stellung D bewegt werden muß oder ein Signal der zweiten Wähleinrichtung über einen vorgegebenen Zeitraum anliegen muß, um einen Wechsel der Betriebsart herbeizuführen.

Erreicht das Fahrzeug für die Vorrichtung erkennbare Betriebsgrenzen, an denen beispielsweise ein Überdrehen oder ein Abwürgen des Motors auftritt, für den gerade eingelegten Getriebegang, so wird auch ohne Schaltbefehl des Fahrers eine Schaltung ausgelöst, um das Fahrzeug wieder in die zulässigen Betriebsgrenzen zu bringen. Weiter ist es vorgesehen, daß nach Ablauf eines vorgegebenen Zeitraumes ohne eine erneute manuelle Schaltanforderung des Fahrers der manuelle Schaltmodus verlassen wird und der automatische Schaltmodus aktiviert wird.

In der DE 197 09 506 A1 ist ein Automatgetriebe eines Kraftfahrzeuges beschrieben, bei welchem ein manuelles Schalten anstatt einer automatischen Schaltung durchführbar ist. Bei einer automatischen Schaltung wählt ein Controller ein geeignetes Übersetzungsverhältnis gemäß einer Fahrzeuggeschwindigkeit sowie eines Drosselventilöffnungsgrades.

Wünscht ein Fahrer ein manuelles Schalten und versetzt er einen Schalthebel in eine M-Bereichsposition, führt der Controller ein Steuerprogramm aus, um in dem M-Bereich eine manuelle Schaltsteuerung auszuführen. In Abhängigkeit von vorgegebenen Betriebszuständen des Fahrzeuges, insbesondere des Motores und des Automatgetriebes, wird in einem manuellen Schaltmodus festgestellt, ob kritische Betriebszustände erreicht sind, die ein automatisches Schalten erfordern. Ergibt eine entsprechende Abfrage, daß derartige kritische Betriebszustände erreicht worden sind, wird beispielsweise bei einer sehr geringen Fahrzeuggeschwindigkeit eine Zwangsrückschaltung automatisch eingeleitet, und bei einer hohen Fahrgeschwindigkeit, die mit einer hohen Motordrehzahl einhergeht, wird automatisch eine Zwangshochschaltung durchgeführt.

Diese aus dem Stand der Technik bekannten Lösungen zum Wechseln zwischen einem automatischen Schaltmodus und einem manuellen Schaltmodus weisen jedoch den Nachteil auf, daß sie zeitgesteuert ablaufen und - wenn überhaupt - nur bestimmte Betriebssituationen berücksichtigen. Darüber hinaus stellen sie für einen Fahrer eines Fahrzeuges nur einen ungenügenden Bedienkomfort zur Verfügung.

Das Problem des ungenügenden Bedienkomforts besteht insbesondere bei aus der Praxis bekannten Lösungen, bei denen neben einem Wählhebel, der in einer Wählhebelgasse in zwei Richtungen (+/-) zum Hoch- oder Zurückschalten bewegbar ist, als weitere Wähleinrichtung eine Schalteinrichtung zur sogenannten "Tipp-Schaltung" vorgesehen ist, bei der durch Antippen eines entsprechenden Sensors beispielsweise an einem Lenkrad in die nächsttiefere oder nächsthöhere Gangstufe geschaltet werden kann. Aktiviert der Fahrer durch die Betätigung eines solchen Tipp-Schalters am Lenkrad den manuellen Schaltmodus, so muß er bei aus der Praxis bekannten Lösungen zum Wechseln in den automatischen Betrieb üblicherweise den Wählhebel in die Wählhebelgasse für manuellen Betrieb bewegen und ihn aus dieser Position wieder zurückstellen.

Aufgabe der vorliegenden Erfindung ist es, ein Verfahren zum Steuern eines selbsttätig schaltenden Fahrzeuggetriebes zur Verfügung zu stellen, mit dem eine individuelle Anpassung der Steuerung eines Fahrzeuggetriebes an die vorliegende Betriebssituation und den Fahrstil des jeweiligen Fahrers bei Gewährleistung einer guten Fahrstabilität des Fahrzeuges durchführbar ist, und mit dem für den Fahrer ein hoher Bedienkomfort erreicht wird.

Erfindungsgemäß wird diese Aufgabe mit einem Verfahren gemäß den Merkmalen des Patentanspruches 1 gelöst.

Das erfindungsgemäße Verfahren, bei dem der manuelle Schaltbetriebsmodus verlassen wird, wenn eine aktuelle Fahrzeuggeschwindigkeit kleiner als ein Schwellwert ist oder eine Längsbeschleunigung des Fahrzeugs innerhalb eines definierten Bereiches liegt und eine Querbeschleunigung des Fahrzeugs kleiner als ein Schwellwert ist und ein Fahrertypbewertungszähler kleiner als ein Grenzwert ist, bietet den Vorteil, daß der Ausstieg aus dem manuellen Schaltmodus an die jeweilige Betriebssituation und den jeweiligen Fahrertyp des Fahrzeugführers angepaßt erfolgt.

Mit dem erfindungsgemäßen Ausstieg aus dem manuellen Schaltmodus bei Unterschreiten einer minimalen Fahrzeuggeschwindigkeit kann z.B. die Betriebssituation berücksichtigt werden, daß der Fahrer bei einem Ausrollen des Fahrzeuges vergißt, daß er sich im manuellen Betrieb befindet und somit schalten müßte. Andererseits kann mit den Kriterien der Längs- und Querbeschleunigung sowie des Fahrertypbewertungszählers verhindert werden, daß bei einem sehr sportlichen Fahrer zu früh von manuellem Betrieb in den automatischen Schaltmodus gewechselt wird. Der Ausstieg über die Fahraktivität entsprechend der Fahrertypbewertung ist wesentlich besser dem Fahrer angepaßt als ein z.B. aus dem Stand der Technik bekannter Ausstieg über eine vorgegebene Zeit.

Gleichzeitig dient das erfindungsgemäße Verfahren der Erhöhung der Sicherheit, da mit der Berücksichtigung der Längsbeschleunigung und der Querbeschleunigung des Fahrzeugs sowie der aktuellen Fahrzeuggeschwindigkeit ein Wechsel des Schaltmodus in kritischen Fahrsituationen unterdrückt wird, was ansonsten gegebenenfalls zu einer Gefährdung der Fahrstabilität führen könnte.

Des weiteren ist bei dem erfindungsgemäßen Verfahren von Vorteil, daß dem Fahrzeugführer ein großer Bedienkomfort geboten wird, indem ein automatischer Wechsel von manuellem Schaltmodus in automatischen Schaltmodus durchgeführt wird, wenn der Fahrer den manuellen Schaltmodus durch Betätigen eines Tipp-Schalters z.B. am Lenkrad aktiviert hat. Eine zusätzliche Betätigung der Wähleinrichtung zur Rückkehr in den automatischen Schaltmodus durch den Fahrer kann somit bei Vorliegen einer unkritischen, durch die aktuelle Fahrzeuggeschwindigkeit, die Längsbeschleunigung des Fahrzeugs, die Querbeschleunigung des Fahrzeugs und den Fahrertypbewertungszähler definierte Fahrsituation entfallen.

Insbesondere vorteilhaft ist es, wenn der manuelle Schaltmodus deaktiviert wird, wenn keine weitere manuelle Vorgabe über die Wähleinrichtung vorliegt. Da dann davon ausgegangen werden kann, daß der Fahrer nicht mehr aktiv in die Wahl des Übersetzungsverhältnisses eingreifen möchte, sollte der für den Fahrer komfortablere und darüber hinaus auch verbrauchsoptimierte automatische Schaltmodus aktiv sein.

Weitere Vorteile und vorteilhafte Ausgestaltungen des Gegenstandes nach der Erfindung ergeben sich aus der nachfolgenden Beschreibung, den Patentansprüchen und der Zeichnung.

Ein Ausführungsbeispiel des erfindungsgemäßen Verfahrens zum Steuern eines Automatgetriebes wird anhand der Zeichnung in der nachfolgenden Beschreibung näher erläutert.
Es zeigt:
- Fig. 1: eine schematische Darstellung einer Schaltvorrichtung für ein durch ein elektronisches Steuergerät gesteuertes Fahrzeugautomatgetriebe, welches gemäß dem Verfahren nach der Erfindung ansteuerbar ist und
- Fig. 2: eine mit der Schaltvorrichtung nach Fig. 1 verbundene Wähleinrichtung, welche als Tipp-Taste an einem Multifunktionslenkrad ausgebildet ist.

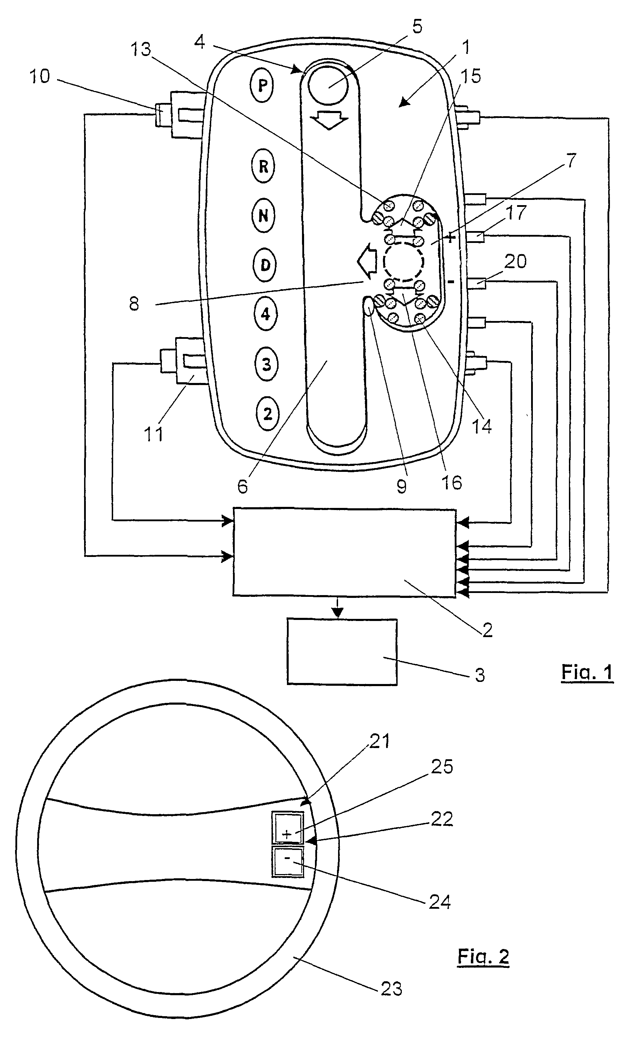

In Fig. 1 ist eine Schaltvorrichtung 1 für ein durch ein elektronisches Steuergerät 2 gesteuertes Automatgetriebe 3 eines Kraftfahrzeuges dargestellt, wobei das Automatgetriebe 3 in der Fig. 1 lediglich symbolisch angedeutet ist. Die Schaltvorrichtung 1 weist eine erste Schalteinrichtung 4 für ein dynamisches Schaltprogramm auf, in der mittels Anwahl einer Schaltposition P zum Parkieren des Fahrzeugs, einer Schaltposition R zur Rückwärtsfahrt, einer Schaltposition N für den Leerlauf und einer Schaltposition D für Automatik-Vorwärtsfahrt nach Vorgabe einer adaptiven Getriebesteuerung verschiedene automatisch zu schaltende Getriebegänge vorwählbar sind. Hierzu dient ein als Wähleinrichtung fungierender Wählhebel 5, welcher in einer ersten Schaltgasse 6, in der Sensoren für die vorbeschriebenen Schaltpositionen angeordnet sind, verschiebbar ist. In dieser ersten Schaltgasse 6 sind neben den Schaltpositionen P, R, N und D noch weitere Schaltpositionen "4" für eine vierte Gangstufe, "3" für eine dritte Gangstufe und "2" für eine zweite Gangstufe vorgesehen.

Neben der ersten Schaltgasse 6 für einen automatischen Schaltmodus ist zur Ausführung eines manuellen Schaltmodus eine parallel zur ersten Schaltgasse 6 angeordnete zweite Schaltgasse 7 vorgesehen, in die der Wählhebel 5 über eine Quergasse 8 umschaltbar ist. Zur Erfassung der Umschaltbewegung zwischen der ersten Schaltgasse 6 für automatischen Schaltmodus und der zweiten Schaltgasse 7 für manuellen Schaltmodus ist ein in Fig. 1 symbolisch angedeuteter Sensor 9 im Bereich der Quergasse 8 angeordnet. Die sensorisch erfaßte Stellung des Wählhebels 5 wird über Signalübertragungseinrichtungen 10, 11 als Signale an das elektronische Steuergerät 2 ausgegeben.

Wenn sich der Wählhebel 5 in der zweiten Schaltgasse 7 befindet, wird er von Federn 13, 14 in einer in Fig. 1 strichliert gezeigten neutralen Mittellage gehalten, aus der heraus er durch manuelle Betätigung in eine erste mit einem Pfeil 15 angedeutete Richtung für eine Hochschaltung und in eine mit einem Pfeil 16 angedeutete zweite Richtung für eine Rückschaltung bewegbar ist.

Beim Verschieben des Wählhebels 5 in Richtung 15 zur Hochschaltung erreicht dieser eine Schaltposition "+" zur Hochschaltung in die nächst höhere Gangstufe, in der ein Plussensor 17 anspricht und ein entsprechendes Signal an das elektronische Steuergerät 2 ausgibt. Wenn der Fahrer den Wählhebel 5 in die entgegengesetzte Bewegungsrichtung 16 von der Mittellage in der zweiten Schaltgasse 7 in eine Schaltposition "-" zur Rückschaltung bewegt, gibt ein Minussensor 20 ein entsprechendes Rückschaltsignal an das elektronische Steuergerät 2 aus.

Die Schaltvorrichtung 1 weist eine in Fig. 2 dargestellte zweite Schalteinrichtung 21 auf, bei der als Wähleinrichtung ein Tipp-Taster 22 an einem Multifunktionslenkrad 23 vorgesehen ist. Mit Hilfe des Tipp-Tasters 22, welcher vorliegend eine erste Taste 24 für Rückschaltung und eine zweite Taste 25 für Hochschaltungen aufweist, kann der Fahrer ebenfalls manuell eine Hochschaltung oder eine Rückschaltung anfordern. Die konstruktive Ausgestaltung der Tasten 24 und 25 der Wähleinrichtung 22 kann dabei der für Tasten allgemein bekannten Ausführungen entsprechen.

Bei der gezeigten Schalteinrichtung 1 ist somit die Funktionalität des Wählhebels 5 derart erweitert, daß der Fahrer eine manuelle Betriebsart wählen kann, d.h. er kann eine gewünschte Übersetzung aktuell manuell vorgeben. Wenn der Fahrer in die zweite Schaltgasse 7 wechselt, dann wird die aktuelle Übersetzung bzw. die aktuelle Gangstufe des bisherigen Schaltprogramms des Fahrzeuggetriebes übernommen und beibehalten.

Zusätzlich kann der Fahrer über das Multifunktionslenkrad 23 und den als Wähleinrichtung dienenden Tipp-Schalter 22 ebenfalls den manuellen Schaltmodus aktivieren.

Sowohl bei Betätigung des Wählhebels 5 als auch bei Betätigung des Tipp-Tasters 22 werden die Getriebeschaltungen über einen Tipp-Impulszähler bzw. Tipp-Zähler ausgelöst. Wenn der Fahrer z.B. in der zweiten Schaltgasse bzw. Manuellgasse 7 den Wählhebel 5 in Position "+" oder "-" anschlägt, wird ein Tipp-Impuls "+1" bzw. "-1" ausgelöst. Die Tipp-Impulse werden in dem Tipp-Zähler addiert oder subtrahiert. Über Schaltanforderungen wird der Tipp-Zähler daraufhin "abgearbeitet", bis er auf "0" steht. Eine Hochschaltung wird dabei angefordert, wenn der Zähler größer 0 ist, während eine Rückschaltung angeforder wird, wenn der Zähler kleiner 0 ist. Nach jeder Hochschaltung wird der Tipp-Zähler wieder um den Wert "1" dekrementiert und nach jeder Rückschaltung wird der Tipp-Zähler um den Wert "1" inkrementiert.

In manuellem Schaltmodus ist ein Tipp-Schaltprogramm aktiviert, in dem zugeordnete Gang- und Wandlerkennlinien enthalten sind. Nach diesem Tipp-Schaltprogramm wird z.B. eine Zwangsschaltung durchgeführt, wenn der Fahrer trotz erforderlicher Schaltung z.B. beim Abbremsen bis zum Stillstand des Fahrzeuges, keine Schaltung vornimmt. Damit ist der Tipp-Betrieb nur in bestimmten Grenzen des Fahrbetriebs möglich, und bei Erreichen vorgegebener Kennlinien des Fahrprogramms wird zwangsgeschaltet. Das Tipp-Schaltprogramm kann hierzu obere und untere Grenzwerte, die vom jeweiligen Fahrzeughersteller beeinflußt werden können, sowie definitive Maximal- und Minimalwerte enthalten, mit denen eine Getriebebeschädigung, wie z.B. eine Schädigung durch Aufreißen der Kupplung eines hydrodynamischen Drehmomentwandlers bei niedriger Drehzahl und hohem Moment und anschließendem Zuschnappen der Wandlerkupplung (eines hydrodynamischen Drehmomentwandlers bei extrem niedrigen Drehzahlen), verhindert wird.

Vorteilhafterweise kann das Tipp-Schaltprogramm zudem eine Funktion zur Erkennung eines Kick-Down aufweisen, wobei ein Kick-Down z.B. erkannt wird, wenn das Fahrpedal eine maximale Schwelle überschreitet. Die Kick-Down-Bewertung verläuft wie im automatischen Schaltmodus, jedoch erweitert um eine applizierbare Zeit, für die der Kick-Down-Zustand maximal gehalten wird. Mit der Vorgabe der applizierbaren Zeit für den Kick-Down-Zustand wird ein Getriebeschutz erreicht, da die Kick-Down-Drehzahlgrenzen gegebenenfalls extrem ausgelegt sein können und eine Schaltung gegebenenfalls erst nach Erreichen dieser Drehzahl erreicht wird, wobei in dieser Zwischenzeit andere Grenzwerte im Getriebe mit schädigender Wirkung überschritten werden können.

Wird die maximale E'ahrpedalschwelle wieder unterschritten, spätestens aber nach Ablauf der applizierbaren Kick-Down-Zeit, wird der Kick-Down-Zustand verlassen. Um erneut auf Kick-Down zu erkennen, muß die maximale Fahrpedalschwelle auf jeden Fall zunächst wieder unterschritten werden.

Nach Verlassen des Kick-Down-Zustandes wird vorzugsweise eine Verzögerungszeit gestartet, in der abgewartet wird, ob der Fahrer nicht doch wieder in den Kick-Down-Betrieb wechseln möchte. Erst nach dieser Verzögerungszeit, welche zwischen 0 Sekunden und 10 Sekunden betragen kann, wird eine Hochschaltung zugelassen.

Für den Fall, daß eine vom Fahrer ausgelöste bzw. angeforderte Tipp-Schaltung nicht ausgeführt wird, da diese Anforderung als unzulässig erkannt wird, wird bei der vorliegenden Ausführung dem Fahrer ein optisches Signal über eine in der Zeichnung nicht näher dargestellte Anzeige ausgegeben. Ebenso ist es jedoch auch möglich, daß der Fahrer akustisch oder haptisch über einen Fehler im Tipp-Betrieb bzw. eine unzulässige Schaltanforderung informiert wird.

Falls der Fahrer z.B. über den Tipp-Schalter 22 am Multifunktionslenkrad 23 den manuellen Schaltmodus aktiviert hat, so kann der Ausstieg aus dem manuellen Schaltmodus auf komfortable Weise ohne weiteres Eingreifen des Fahrers erfolgen, wenn die Fahrzeuggeschwindigkeit einen minimalen Schwellwert unterschreitet. Gleichfalls findet ein Ausstieg aus dem manuellen Schaltmodus statt, wenn eine Längsbeschleunigung des Fahrzeuges innerhalb eines definierten Bereiches liegt und eine Querbeschleunigung des Fahrzeuges kleiner als ein Schwellwert ist sowie ein Fahrertypbewertungszähler kleiner als ein vorgegebener Grenzwert ist und somit ein Fahrertypkriterium erfüllt ist, welches im folgenden näher erläutert wird.

Das elektronische Steuergerät 2 umfaßt eine nicht näher dargestellte Fahrertypbewertung, welche per se bekannt ist und eine Kick-Fast-Bewertung, eine Kick-Down-Bewertung und eine Fahrbetriebserkennung, beispielsweise ob Konstantfahrt vorliegt, umfassen kann. Die Fahrertypbewertung erfolgt üblicherweise mittels Zählerwerten, die in definierte, einen bestimmten Fahrertyp bzw. Fahrstil zugeordnete Zählerwertbereiche unterteilt sind. Der Zähler kann einen Hochzähler und einen Runterzähler aufweisen, wobei der Hochzähler mit dem Wert 0 beginnt und kontinuierlich bis zu einem Zählerwert von beispielsweise 100 ansteigt, und der in entgegengesetzte Richtung verlaufende Runterzähler mit dem maximalen Zählerwert von hier 100 beginnt und kontinuierlich bis zu dem Zählerwert 0 absteigt. Die Zählerwertebereiche stellen Sportlichkeitsstufen eines Fahrertyps bzw. Fahrverhaltens dar, wobei mit aufsteigender Zahl des Zählerwertebereiches bzw. des Zählers die Sportlichkeit der Bewegung eines Fahrzeugs höher eingeschätzt wird. Entsprechend wird der Fahrer bei einem Zählerwert 0 als ökonomischer Fahrer und bei einem Zählerwert 100 als sehr sportlicher Fahrer angenommen. Die Fahrertypbewertung läuft sowohl im automatischen Schaltmodus als auch im manuellen Schaltmodus.

Wenn der Fahrer z.B. durch Betätigung des Tipp-Tasters 22 eine Aktivierung des manuellen Schaltmodus, welcher gegenüber dem automatischen Schaltmodus präferiert ist, herbeiführt, wird auf den aktuellen Wert des Fahrertypbewertungszählers ein Offset-Wert addiert. Der Fahrertypbewertungszähler wird anschließend bei aktiviertem manuellen Schaltmodus ohne manuelle Vorgabe runtergezählt bzw. dekrementiert, bis der Fahrertypbewertungszähler einen vorgegebenen Grenzwert unterschreitet. Bei diesem Grenzwert wird wieder in den automatischen Schaltmodus gewechselt, wenn der Tipp-Taster 22 am Multifunktionslenkrad 23 zwischenzeitlich nicht betätigt wurde.

Nimmt man beispielsweise an, daß der Fahrertypbewertungszähler im automatischen Schaltmodus bei einem Wechsel zum manuellen Schaltmodus einen Wert von 40 hat, wird ein Offset von z.B. 30 auf den Fahrertypbewertungszähler addiert, so daß sich insgesamt eine deutlich höhere Fahreraktivität ergibt. Nach einer kurzen Zeitspanne, welche beispielsweise innerhalb einer Minute liegen kann, wird der Fahrertypbewertungszähler einen vorgegebenen Grenzwert von z.B. 30 unterschreiten, bei dem der manuelle Schaltmodus wieder verlassen wird. Es wird dabei genau in dem Augenblick in den automatischen Schaltmodus gewechselt, in dem die Fahraktivität des Fahrers bzw. der diese ausdrückende Fahrertypbewertungszähler im manuellen Schaltmodus der Fahraktivität im automatischen Schaltmodus entspricht.

Falls der Fahrer im manuellen Schaltmodus sehr sportlich fährt, ohne zu tippen, wird der Ausstieg in den automatischen Schaltmodus dementsprechend länger dauern, da die Dekrementierung des Fahrertypbewertungszählers bei einer leistungsorientierten Fahrweise des Fahrers gegenüber einer verbrauchsorientierten Fahrweise verzögert ist. Für den Fall, daß der Fahrer wiederholt die manuelle Wähleinrichtung, wie z.B. den Tipp-Taster 22, betätigt, wird bei jeder Betätigung der manuellen Wähleinrichtung wieder ein Offset auf die Fahreraktivität des Fahrertypbewertungszählers addiert, jedoch maximal bis zu dem oberen maximalen Grenzwert der Fahrertypbewertung, welcher hier den Wert 100 hat. Der Ausstieg aus dem manuellen Schaltmodus wird somit bei einer manuellen Vorgabe, welche über den Wählhebel 5 der Wähleinrichtung in der Manuellgasse 7 oder über den Tipp-Taster 22 erfolgen kann, entsprechend länger dauern.

Wenn nun von dem manuellen Schaltmodus in den automatischen Schaltmodus gewechselt wird, wird bei Verlassen des manuellen Schaltmodus ein dem aktuellen Wert des Fahrertypbewertungszählers zugeordnetes Schaltprogramm des automatischen Schaltmodus aktiviert, so daß das vorliegende Schaltprogramm der aktuellen Fahraktivität entspricht.

Alternativ hierzu kann jedoch aber auch vorgesehen sein, daß bei einem Wechsel von dem manuellen Schaltmodus in den automatischen Schaltmodus ein vordefiniertes Schaltprogramm aktiviert wird, womit die Fahraktivität fest vorgegeben wird. In diesem Fall bietet es sich an, als vordefiniertes Schaltprogramm ein sportliches Programm vorzugeben, das auch dem ambitionierteren Fahrer eine zufriedenstellende Fahrzeugspontanität bietet.

Für den Fall, daß vor einem Wechsel aus dem automatischen Schaltmodus in den manuellen Schaltmodus ein Sonderschaltprogramm, wie z.B. ein Sportprogramm oder ein Winterfahrprogramm, aktiviert war, wird nach dem Verlassen des manuellen Schaltmodus dieses Sonderschaltprogramm erneut angewählt, d.h. es werden die Schaltprogramme für sportlichen Fahrbetrieb oder Winterfahrbetrieb wiederhergestellt.

Des weiteren ist bei der hier vorgestellten Ausführung vorgesehen, daß der manuelle Schaltmodus verlassen wird, wenn eine unzulässig hohe Temperatur des Fahrzeuggetriebes und/oder des Motors festgestellt wird, wobei dann Schaltkennlinien des automatischen Schaltmodus gewählt werden, die zur Senkung der betreffenden Temperatur führen.

Neben dem oben beschriebenen selbsttätigen Verlassen des manuellen Schaltmodus und Wechsel in den automatischen Fahrbetrieb kann selbstverständlich auch ein Wechsel von manuellem zu automatischem Schaltmodus bei der gezeigten Ausführung auf Wunsch des Fahrers manuell über eine Betätigung des Wählhebels 5 aus der Manuellgasse bzw. zweiten Schaltgasse 7 in Richtung der ersten Schaltgasse 6 für den automatischen Schaltmodus realisiert werden.

Hierbei ist vorgesehen, daß bei Verlassen des manuellen Schaltmodus eine Verzögerungszeit gestartet wird, welche beispielsweise zwischen 0 Sekunden und 10 Sekunden liegen kann. Erst nach Ablauf dieser Verzögerungszeit wird eine erste Übersetzungsänderung in dem automatischen Schaltmodus ausgeführt. Auf diese Weise soll vermieden werden, daß der Fahrer versehentlich in den automatischen Schaltmodus wechselt.

Es versteht sich, daß das erfindungsgemäße Verfahren nicht an die oben beschriebene konstruktive Ausführung der Schaltvorrichtung gebunden ist, sondern auch bei beliebig anders konstruktiv ausgeführten Wähleinrichtungen zur Realisierung eines manuellen Schaltmodus und eines automatischen Schaltmodus anwendbar ist.

### Bezugszeichen

- 1: Schaltvorrichtung
- 2: elektronisches Steuergerät
- 3: Automatgetriebe
- 4: erste Schalteinrichtung
- 5: Wähleinrichtung, Wählhebel
- 6: erste Schaltgasse
- 7: zweite Schaltgasse, Manuellgasse
- 8: Quergasse
- 9: Sensor
- 10: Signalübertragungseinrichtung
- 11: Signalübertragungseinrichtung
- 13: Feder
- 14: Feder
- 15: Schaltbewegungsrichtung der Wähleinrichtung zur Hochschaltung
- 16: Schaltbewegungsrichtung der Wähleinrichtung zur Rückschaltung
- 17: Plussensor
- 20: Minussensor
- 21: zweite Schalteinrichtung
- 22: Wähleinrichtung, Tipp-Taster
- 23: Multifunktionslenkrad
- 24: erste Taste
- 25: zweite Taste

## Patentansprüche

1. Verfahren zum Steuern eines Automatgetriebes (3), bei dem eine Anforderung zum Ändern einer aktuellen Übersetzung des Automatgetriebes (3) bei Erreichen vorgegebener Betriebszustände des Fahrzeuges automatisch oder auf manuelle Vorgabe in einem manuellen Schaltmodus generiert wird, wobei der aktivierte manuelle Schaltmodus gegenüber einem automatischen Schaltmodus präferiert ist, und wobei der manuelle Schaltmodus verlassen wird, wenn eine aktuelle Fahrzeuggeschwindigkeit kleiner als ein Schwellwert ist oder alternativ die drei folgenden Kriterien erfüllt sind:
- eine Längsbeschleunigung des Fahrzeugs innerhalb eines definierten Bereiches liegt und
- eine Querbeschleunigung des Fahrzeugs kleiner als ein Schwellwert ist und
- ein Fahrertypbewertungszähler kleiner als ein Grenzwert ist.

2. Verfahren nach Anspruch 1, **dadurch gekennzeichnet, daß** der manuelle Schaltmodus deaktiviert wird, wenn keine weitere manuelle Vorgabe erkannt wird.

3. Verfahren nach Anspruch 1 oder 2, **dadurch gekennzeichnet, daß** bei Aktivierung des manuellen Schaltmodus durch eine manuelle Vorgabe auf den Fahrertypbewertungszähler ein Offsetwert addiert wird.

4. Verfahren nach einem der Ansprüche 1 bis 3, **dadurch gekennzeichnet, daß** bei einer manuellen Vorgabe in manuellem Schaltmodus auf den Fahrertypbewertungszähler ein Offsetwert addiert wird.

5. Verfahren nach einem der Ansprüche 1 bis 4, **dadurch gekennzeichnet, daß** der Fahrertypbewertungsszähler bei aktiviertem manuellen Schaltmodus ohne manuelle Vorgabe dekrementiert wird.

6. Verfahren nach einem der Ansprüche 1 bis 5, **dadurch gekennzeichnet, daß** eine manuelle Vorgabe erfolgt, wenn ein Wählhebel (5) einer Wähleinrichtung in einer Manuellgasse (7) bewegt wird oder ein Tipp-Taster (22) der Wähleinrichtung betätigt wird.

7. Verfahren nach einem der Ansprüche 1 bis 6, **dadurch gekennzeichnet, daß** bei einem Wechsel in manuellen Schaltmodus eine aktuelle Übersetzung eines bisherigen Schaltprogrammes des Automatgetriebes (3) übernommen und beibehalten wird.

8. Verfahren nach einem der Ansprüche 1 bis 7, **dadurch gekennzeichnet, daß** bei einem Wechsel in den automatischen Schaltmodus ein dem aktuellen Fahrtypbewertungszähler zugeordnetes Schaltprogramm aktiviert wird.

9. Verfahren nach einem der Ansprüche 1 bis 7, **dadurch gekennzeichnet, daß** bei einem Wechsel in den automatischen Schaltmodus ein vordefiniertes Schaltprogramm aktiviert wird.

10. Verfahren nach einem der Ansprüche 1 bis 9, **dadurch gekennzeichnet, daß** ein vor einem Wechsel in den manuellen Schaltmodus aktives Sonderschaltprogramm nach Verlassen des manuellen Schaltmodus erneut angewählt wird.

11. Verfahren nach einem der Ansprüche 1 bis 10, **dadurch gekennzeichnet, daß** ein Wechsel von manuellem zu automatischem Schaltmodus durch Betätigung der Wähleinrichtung (5, 22) durchführbar ist, wobei bei Verlassen des manuellen Schaltmodus vorzugsweise eine Verzögerungszeit gestartet wird, nach deren Ablauf eine erste Übersetzungsänderung in automatischem Schaltmodus realisierbar ist.

12. Verfahren nach einem der Ansprüche 1 bis 12, **dadurch gekennzeichnet, daß** in manuellem Schaltmodus ein Tipp-Schaltprogramm aktiviert ist, in dem zugeordnete Gang- und Wandlerkennlinien abgelegt sind.

13. Verfahren nach Anspruch 12, **dadurch gekennzeichnet, daß** das Tipp-Schaltprogramm eine Funktion zur Erkennung eines Kick-Down aufweist, wobei ein Kick-Down-Zustand maximal für eine applizierbare Zeit gehalten wird.

14. Verfahren nach Anspruch 12 oder 13, **dadurch gekennzeichnet, daß** ein akustisches, haptisches oder optisches Signal ausgegeben wird, wenn das Tipp-Schaltprogramm eine Schaltanforderung des Fahrers als unzulässig erkennt.

15. Verfahren nach einem der Ansprüche 1 bis 14, **dadurch gekennzeichnet, daß** der manuelle Schaltmodus verlassen wird, wenn eine unzulässig hohe Temperatur des Automatgetriebes und/oder des Motors festgestellt wird, wobei Schaltkennlinien des automatischen Schaltmodus gewählt werden, die zur Senkung der betreffenden Temperatur führen.

## Claims

1. Procedures for controlling an automatic transmission (3), where a call / request is generated for changing the current transmission's ratio of the given automatic transmission (3) upon reaching automatically or by manual gear selection the pre-determined vehicle's operating modes whereas the activated manual shifting modeis preferred to an automatic shift mode, and the manual shift mode is left if the current vehicle speed is smaller than a threshold value. Or alternatively, if the three following criteria are fulfilled:
- The longitudinal acceleration of the vehicle lies within a defined range and,
- The transversal acceleration of the vehicle is smaller than the threshold value and,
- The driver type evaluation counter/rating is smaller than the limit value.

2. Method according to claim 1, **characterized in**
**that** the manual shift mode is deactivated if no further manual specification is recognized.

3. Procedure according to claim 1 or 2, **characterized in that** during activation of the manual shift mode an offset value is added on to the driver type evaluation counter / rating due to manual prerequisites.

4. Procedure in accordance with one of claims 1 to 3, **characterized in that** an offset value is added on to the driver type evaluation counter / rating due to manual specification in the manual shift mode.

5. Procedure according to claim 1 to 4, charactrized in that the driver type evaluation counter / rating is decremented without manual specification during the activated manual shift mode.

6. Procedure according to one of the claims 1 to 5, characterized in that a manual specification will be effected either if a selector lever (5) of a selection device in a manual gate (7) is moved or if a tip button [push button] (22) of the selection device is actuated.

7. Procedure according to one of the claims 1 to 6, characterized in that when changing over to a manual shift mode, the current transmission's ratio of the previous shift program of the automatic transmission (3) is adopted and kept.

8. Procedure according to one of the claims 1 to 7, characterized in that upon a changeover to the automatic shift mode, the shift program dedicated to the current driver type evaluation counter / rating is activated.

9. Procedure according to one of the claims 1 to 7, characterized in that upon a changeover to the automatic shift mode, a pre-defined shift program is activated.

10. Procedure according to one of the claims 1 to 9, charcterized in that a special shift program which was active previous to a changeover into the manual shift mode is called up again after leaving the manual shift mode.

11. Procedure according to one of the claims 1 to 10, charcterized in that a changeover from a manual to an automatic shift mode is feasible by activating the selection equipment (5, 22). When leaving the manual shift mode, a deceleration time is preferably started. Upon timeout of this period, it is possible to realize a first change in the gear ratio selected for the automatic shift mode.

12. Procedure according to one of the claims 1 to 12, charcterized in that a push-button shift program is active during the manual shift mode where the respectively assigned gear and torque converter characteristic lines are saved.

13. Procedure according to claim 12, **characterized in that** the push-button shift program features a mechanism to recognize a kick-down whereas the state of being in a kick-down process is maintained at maximum for an applicable period.

14. Procedure according to claim 12 or 13, characterized in that an acoustic, haptic, or optical signal is released if a shift request of the driver is identified as inadmissible by the push-button shift program.

15. Procedure according to one of the claims 1 to 14, charcterized in that a manual shift mode is quit if an inadmissibly high temperature of the automatic transmission and/or of the engine is detected whereas shifting characteristics of the automatic shift mode are selected which lead to a reduction in the temperature values concerned.

## Revendications

1. Procédé pour commander une boîte de vitesses automatique (3) dans laquelle la sollicitation pour un changement du rapport de vitesses instantané de la boîte de vitesses automatique (3) est générée suite à une directive automatique ou manuelle au moment où le véhicule a atteint des conditions de circulation prédéterminées, dans un mode de commande manuel, dans lequel le mode de commande manuel activé est préféré par rapport à un mode de commande automatique, et dans lequel le mode de commande manuel est abandonné lorsque la vitesse instantanée du véhicule est inférieure à une valeur de seuil ou si, à titre de variante, les trois critères suivants sont remplis:
- une accélération longitudinale du véhicule se situe à l'intérieur d'une fourchette définie, et
- une accélération transversale du véhicule est inférieure à une valeur de seuil, et
- un compteur d'évaluation du type de conducteur foumit une indication inférieure à une valeur de seuil.

2. Procédé selon la revendication 1, **caractérisé en ce que** le mode de commande manuel est désactivé lorsque aucune autre directive manuelle est reconnue.

3. Procédé selon la revendication 1 ou 2, **caractérisé en ce qu'**une valeur additionnelle est ajoutée à la valeur du compteur d'évaluation du type de conducteur lors de l'activation du mode de commande manuelle par une directive manuelle.

4. Procédé selon l'une des revendications 1 à 3, **caractérisé en ce que** qu'une valeur additionnelle est rajoutée au compteur d'évaluation du type de conducteur pour une directive en mode de commande manuelle.

5. Procédé selon l'une des revendications 1 à 4, **caractérisé en ce que** le compteur d'évaluation du type de conducteur est décrémenté sans directive manuelle par l'activation du mode de commande manuelle.

6. Procédé selon l'une des revendications 1 à 5, **caractérisé en ce qu'**une directive manuelle résulte du déplacement d'un levier de sélection (5) d'un dispositif de sélection dans une ruelle de commande manuelle (7) ou d'une touche (22) du dispositif de sélection.

7. Procédé selon l'une des revendications 1 à 6, **caractérisé en ce qu'**une démultiplication actuelle d'un programme de commande automatique des vitesses en cours d'utilisation de la boîte de vitesses automatique (3) est reprise et maintenue lors d'un changement en mode manuel.

8. Procédé selon l'une des revendications 1 à 7, **caractérisé en ce ;qu'**un programme de commande des vitesses attribué au compteur d'évaluation du type de conducteur est activé lors d'un changement de vitesses en mode automatique.

9. Procédé selon l'une des revendications 1 à 7, **caractérisé en ce qu'**un programme de commande du changement de vitesses prédéfini est activé lors d'un changement en mode automatique.

10. Procédé selon l'une des revendications 1 à 9, **caractérisé en ce qu'**un programme actif spécial de commande des vitesses est à nouveau sélectionné après l'abandon du mode de commande manuel et avant un nouveau passage en mode manuel.

11. Procédé selon l'une des revendications 1 à 10, **caractérisé en ce qu'**un passage du mode manuel en mode automatique est rendu possible par l'actionnement du dispositif de sélection (5, 22), un délai de temporisation étant de préférence démarré au moment de l'abandon du mode manuel, et un premier changement de vitesses pouvant être effectué en mode automatique après l'échéance de ce délai de temporisation.

12. Procédé selon l'une des revendications 1 à 12, **caractérisé en ce qu'**un programme de commande par touches est activé en mode manuel, dans lequel sont stockées des courbes caractéristiques correspondantes d'une boîte de vitesses ou d'un convertisseur.

13. Procédé selon la revendication 12, **caractérisé en ce que** le programme de commande à touches comprend une fonction de reconnaissance d'une commande de charge, un état de commande de charge maximal ne pouvant être maintenu que pour une durée déterminée.

14. Procédé selon la revendication 12 ou 13, **caractérisé en ce qu'**un signal acoustique, haptique ou optique est émis lorsque le programme de commande par touches identifie une sollicitation de commande interdite provenant d'un conducteur.

15. Procédé selon l'une des revendications 1 à 14, **caractérisé en ce que** le mode manuel de commande des vitesses est abandonné lorsqu'une température excessivement élevée de la boîte de vitesses automatique et/ou du moteur est constatée, des courbes caractéristiques de commande des vitesses du mode automatique étant choisies en vue d'aboutir à une réduction de la température correspondante.
